# EUROPEAN PATENT SPECIFICATION

(11) **EP 2 530 578 B1**
(45) Date of publication and mention of the grant of the patent: **15.02.2017**
(21) Application number: 12170570.1
(22) Date of filing: 01.06.2012
(51) Int. Cl.: G06F 3/0486, G06F 3/0488, G06F 3/0489

(54) **Method and apparatus for providing multi-tasking interface**
Verfahren und Vorrichtung zur Bereitstellung einer Multitask-Schnittstelle
Procédé et appareil pour fournir une interface multitâches

(30) Priority: 03.06.2011 KR 20110053758
(43) Date of publication of application: 05.12.2012
(73) Proprietor: Samsung Electronics Co., Ltd., Suwon-si, Gyeonggi-do, 443-742 (KR)
(72) Inventor: PARK, So Young, 443-742 Gyeonggi-do (KR); YANG, Hui Chul, 443-742 Gyeonggi-do (KR)
(74) Representative: Jenkins, Richard Gavin

(56) References cited:
- US-A1- 2007 220 445
- US-A1- 2008 168 379
- US-A1- 2010 088 628
- US-A1- 2010 281 481
- US-A1- 2010 299 597

## Description

### BACKGROUND OF THE INVENTION

### Field of the Invention

The present invention relates to a method for providing multi-tasking interface and an apparatus thereof. More particularly, although not exclusively, the present invention relates to a terminal, preferably a portable terminal that provides a multi-tasking interface.

### Description of the Related Art

Recently, smart phones have become more and more popular because of the plurality of functions they provide. Further, a recently designed smart phone provides for a variety of functions such as multi-tasking and conference calls.

In a limited number of conventional terminals that are capable of supporting multi-tasking in a very rudimentary fashion, a user switches an application executed in a foreground through a complex interface to control multi-tasking. In addition, when a user switches a voice call process to a background during a voice call in order to finish a corresponding voice call, a complex operation should be performed. The complex can include, for example, selecting a "call end" button after switching a voice call screen from the background to a foreground.

Instead of performing the complex operation, there is a need in the art to execute a multi-tasking application in a simply intuitive operation.

US 2010/281481A1 discloses a user interface for simultaneously representing tasks and notifications in a computing device. The user interface allows a user to bring a selected task to the foreground or close the task, both by interacting with the representations of the tasks.

US 2007/220445A1 discloses an application-switching program displaying representations of applications, e.g. icons, on a screen of a device. As a user navigates between the representations, a screen of the application to a representation of which the user has currently navigated is shown in the background of the display.

US 2010/299597A1 discloses a display management method and system of a mobile terminal for switching between user interfaces of applications.

US 2010/088628A1 discloses a method including displaying a toolbar on a portion of a display of a device, the toolbar including a menu of items, where each item corresponds to an open application window associated with one of the open applications.

### SUMMARY OF THE INVENTION

It is an aim of certain embodiments of the invention to solve, mitigate or obviate, at least partly, at least one of the problems and/or disadvantages associated with the prior art. Certain embodiments aim to provide at least one of the advantages described below.

The present invention has been made in part in view of at least some of the above problems, and provides a method for providing multi-tasking interface conveniently operable by a user, and an apparatus thereof.

Certain aspects and embodiments of the present invention are defined by the appended claims.

In accordance with one exemplary aspect of the present invention, a method for providing a multi-tasking interface of a terminal includes: receiving a background switch input switching an application being executed in a foreground to a background; switching the application to the background when the background switch input is received; displaying a background control interface; and switching the application to the foreground when a preset switch input is received through the background control interface.

In accordance with another exemplary aspect of the present invention, a terminal for providing a multi-tasking interface includes: an input unit adapted to receive a background switch input switching an application being executed in a foreground to a background; a controller adapted to switch the application to a background when the input unit receives the background switch input; and a display unit for displaying a background control interface after the controller switches the application to the background, wherein the controller is adapted to switch the application to the foreground when receiving a preset switch input through the background control interface.

An exemplary embodiment of the present invention has an effect that may provide (i.e. gives the advantage that it provides) a multi-tasking interface method and apparatus conveniently operable by a user.

Another aspect of the invention provides a computer program comprising instructions arranged, when executed, to implement a method and/or apparatus in accordance with any one of the above-described aspects. A further aspect provides machine-readable storage storing such a program.

### BRIEF DESCRIPTION OF THE DRAWINGS

The exemplary objects, features and advantages of aspects and embodiments of the present invention will become more apparent from the following detailed description in conjunction with the accompanying drawings, in which:
FIG. 1 is a block diagram illustrating a configuration of a terminal according to an exemplary embodiment of the present invention;
FIG. 2 is a flowchart illustrating exemplary operation of a method for providing multi-tasking interface useful for understanding the present invention;
FIG. 3 is a flowchart illustrating a method for providing multi-tasking interface according to an exemplary embodiment of the present invention;
FIG. 4 is a view illustrating a background control interface useful for understanding the present invention;
FIG. 5 is a view illustrating exemplary operation of a method for providing multi-tasking interface at the time of a voice call;
FIG. 6a and FIG. 6b are views illustrating exemplary operation of a method for providing multi-tasking interface at the time of a conference call;
FIG. 7a and FIG. 7b are views illustrating exemplary operation of a method for providing multi-tasking interfaces of a call and another interface; and
FIG. 8 is a view illustrating a terminal screen in exemplary operation of a method for providing multi-tasking interface according to another exemplary embodiment of the present invention.

### DETAILED DESCRIPTION

A method and an apparatus for providing a multi-tasking interface according to exemplary embodiments of the present invention are described with reference to the accompanying drawings in detail.

As used herein, the term "application" refers to a work unit executable in a terminal. The application of the present invention includes, but is not limited to, a photographing application, a web browser application, a music playback application, and a voice call application.

As used herein in connection with certain embodiments, the expression "application being executed is displayed in a foreground" refers to an execution screen of a corresponding application is executed while being displayed on foreground of a terminal screen. As used herein in connection with certain embodiments, the expression "application being executed is displayed in a background" refers to an execution screen of a corresponding application is executed while being not displayed on a terminal screen. However, when the application being executed is displayed in the background, information regarding an executed state of a corresponding application may be displayed on a part of the screen.

As used herein in connection with certain embodiments, the expression "display of the application is switched to a foreground" refers to an executed state of a corresponding application being changed to be executed while being displayed in the foreground while the corresponding application was previously being executed while in the background of the display. Conversely, as used herein in connection with certain embodiments, the expression "application is switched to a background display" means that an executed state of a corresponding application changes to be executed when displayed in the background from the corresponding application previously being executed while displayed in a foreground.

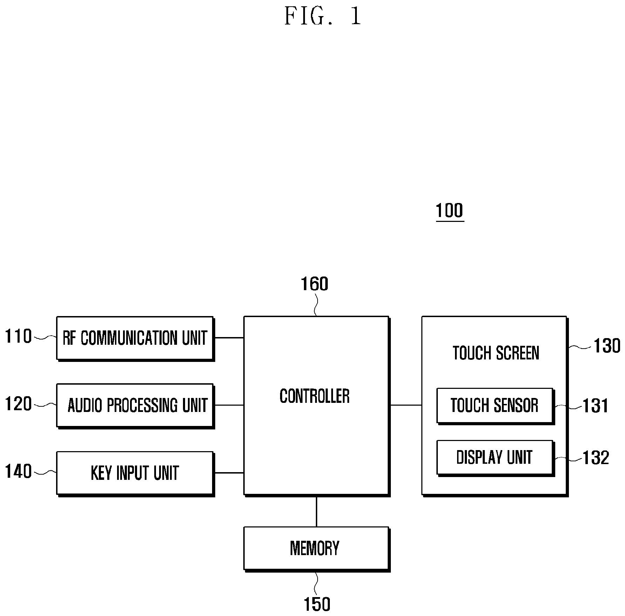

FIG. 1 is a block diagram illustrating a configuration of a terminal 100 according to an exemplary embodiment of the present invention.

Referring now to FIG. 1, a terminal 100 according to an exemplary embodiment of the present invention may preferably include a radio frequency (RF) communication unit 110, an audio processing unit 120, a touch screen 130, a key input unit 140, a memory 150, and a controller 160.

The RF communication unit 110 performs transmitting and receiving functions of corresponding data for RF communication of the terminal 100. The RF communication unit 110 may preferably include a transmitter (not shown) for up-converting a frequency of a transmitted signal and amplifying the signal, a receiver (not shown) low-noise-amplifying a received signal and down-converting the signal. Further, the RF communication unit 110 receives data through an RF channel and outputs the received data to the controller 160. The RF communication unit 110 may transmit data output from the controller 160 through the RF channel.

With continued reference to FIG. 1, the audio processing unit 120 may be configured by a CODEC. The CODEC may include a data CODEC processing packet data and an audio CODE processing an audio signal. The audio processing unit 120 converts a digital audio signal into an analog audio signal using the audio CODEC, and plays the analog audio signal using a speaker SPK. The audio processing unit 120 converts an analog audio signal input from a microphone MIC into a digital audio signal using the audio CODEC.

The touch screen 130 includes a touch sensor 131 and a display unit 132. The touch sensor senses touch input of a user. The touch sensor 131 may be configured by a touch sensor such as a capacitive overlay type, a resistive overlay type, an infrared beam type or a pressure sensor. Besides the foregoing sensors, the touch sensor 131 may be configured by various types of sensor devices capable of sensing contact or pressure of an object. The touch sensor 131 senses touch input of a user to generate a sensing signal and transmits the generated sensing signal to the controller 160. The sensing signal contains coordinates data that a user input a touch. When the user inputs a touch location moving operation, the touch sensor 131 generates and transmits a sensing signal having data coordinates of a touch location moving path to the controller 160.

In particular, the touch sensor 131 may sense a user input (background switch input) switching an application being executed in a foreground to a background according to an exemplary embodiment of the present invention. Further, the touch sensor 131 may sense a user input for switching display of an application being executed from a foreground to a background of the display unit. The user input may include a touch (including multi-touch), drag, sliding, and so on.

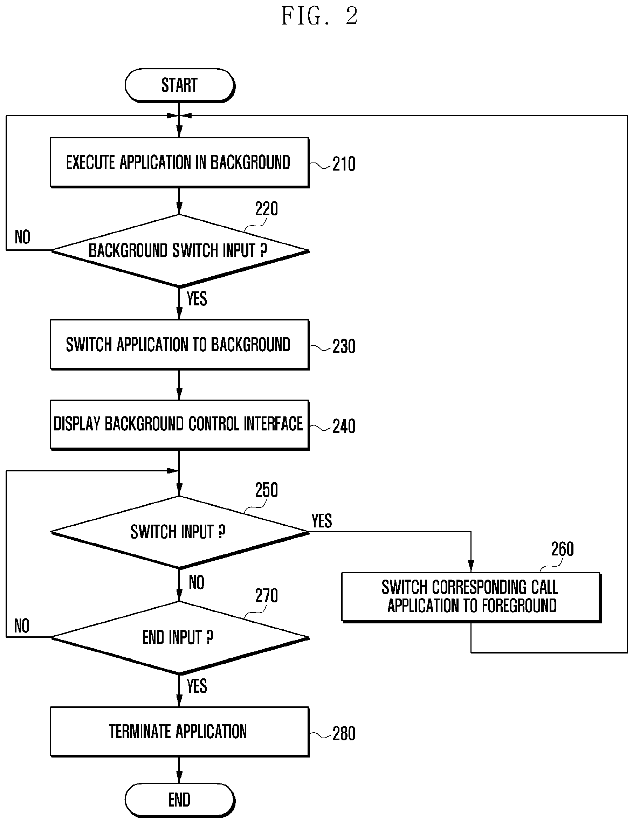

The display unit 132 may be configured, for example, by a Liquid Crystal Display (LCD), an Organic Light Emitting Diode (OLED), or an Active Matrix Organic Light Emitting Diode ((AMOLED), just to name a few possibilities. The display unit 132 visibly provides a menu of the terminal 100, input data, function setting information, and a variety of other information to a user. The display unit 132 executes a function outputting a booting screen, an idle screen, a menu screen, a call screen, and other application screens of the terminal 100. In particular, the display unit 132 according to an exemplary embodiment of the present invention may display a background control interface. The background control interface will now be described with reference to FIG. 2 to FIG. 8.

The terminal 100 of the present invention may be configured to include the touch screen as illustrated previously. However, it should be understood that an exemplary embodiment of the present invention is not applied to only a terminal 100 with the touch screen 130. When the present invention is applied to a terminal without a touch function, the touch screen 130 shown in FIG. 1 may be modified to execute only a function of the display unit 132 via another input, such as keys, etc.

The key input unit 140 receives a key operation of a user for controlling the terminal 100, and generates and transfers an input signal to the controller 160. The key input unit 140 may be configured by either a key pad including numeral keys and arrow keys or a predetermined function key provided at one side of the terminal 100. In an exemplary embodiment of the present invention, the key input unit 140 may be omitted in a terminal that is capable of performing all operations by only the touch screen 130. In a certain exemplary embodiment of the present invention, the key input unit 140 may include a home key. In a corresponding exemplary embodiment, when a user actuates a home key, the key input unit 140 may switch an application currently being executed that is displayed in a foreground of the display to being displayed in a background of the display.

The key input unit 140 and the touch sensor 131 are structural elements receiving user input. Here, structural elements such as the key input unit 140 and the touch sensor 131 receiving user input refer to an input unit.

The memory 150 may store programs and data necessary for operations of the terminal, and can be divided logically or physically, for example, into a program area and a data area. The program area may store a program controlling an overall operation of the terminal 100, an operating system (OS) booting the terminal 100, an application program necessary for playback of multimedia contents, or other option functions of the terminal 100 such as a camera function, a sound playing function, or an image or moving image playing function. The data area stores data created according to operations of the terminal 100 and includes user selected functions, for example, images, moving images, phone-book data, and audio data.

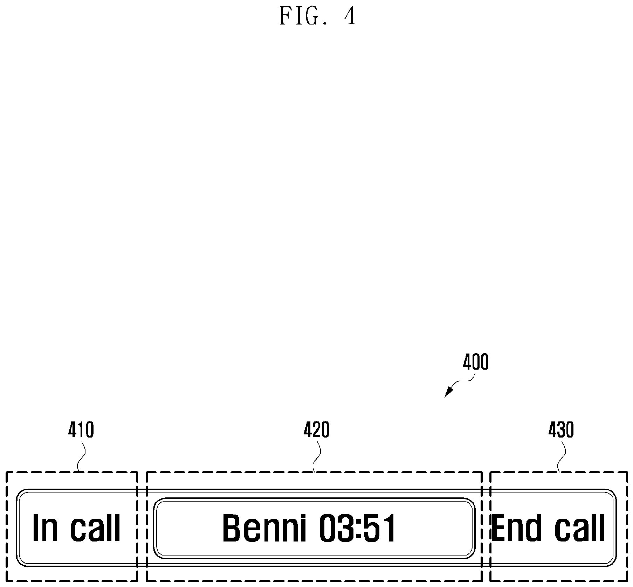

The controller 260 controls an overall operation with respect to respective structure elements. If an input unit receives a background switch input for switching display of an application being executed in a foreground of the display to the background of the display, the controller switches a corresponding application to the background. Further, the controller 160 switches display of a corresponding application to a background and then controls a display unit 132 to display a background control display. Further, when receiving user input through a background control interface (400, FIG. 4), the controller 160 performs an application control operation corresponding to control input. An operation of the controller 160 will be described with reference to FIG. 2 to FIG. 8 in detail.

FIG. 2 is a flowchart illustrating a possible example of a method for providing multi-tasking interface useful for understanding the present invention.

With reference to FIG. 2, an application is executed and displayed in a foreground (210). Here, it may be assumed that the application, for example is a voice call application. When a user pushes a call button to start a call with another user or pushes the call button in response to a call request, a voice call application is executed so as to be displayed in a foreground. Executed conditions of the application displayed in the foreground may change according to applications.

A controller 160 determines whether an input unit receives a background switch input while the application is being executed in the foreground (220). The background switch input is input to switch the application being executed in the foreground to a background. For example, home key input of the key input unit 140 may become the background switch input. When the input unit receives the background switch input, the controller 160 switches the display of application to a background (230). For example, if the user pushes a home key while a call application is being executed in a foreground, the call application displayed may be switched to the background to display a home screen. The home screen may change according to a user setting. For example, an application execution icon selected by the user may be a screen arranged on a background image set by the user. Here, although the home key input is described by way of example, touch input of a preset location or other key inputs may be the background switch input in a modified exemplary embodiment.

After the application is switched to the background, the controller 160 controls a display unit 132 to display a background control interface (240), which may comprise, for example, a graphic user interface (GUI).

FIG. 4 is a view illustrating a background control interface 400 useful for understanding the present invention. The background control interface 400 may includes a switch region 410, an identification (ID) information region 420, and an end region 430.

In the example of FIG. 4, the background control interface 400 has a long transverse bar shape. The switch region 410, the ID information region 420, and the end region 430 may be located at a left side, a center, and a right side of the background control interface 400, respectively. A shape of the background control interface 400, shapes, an arranged order, and directions of the switch region 410, the ID information region 420, and the end region 430 may change according to different exemplary embodiments and/or personal preference. The switch region 410, the ID information region 420, and the end region 430 are shown in FIG. 4 as not overlapping with each other. However, partial regions of the switch region 410, the ID information region 420, and the end region 430 may overlap with each other. Only parts of the switch region 410, the ID information region 420, and the end region 430 may be included in the background control interface 400.

An application corresponding to the background control interface 400, namely, ID information of an application controlled by the background control interface 400 may be displayed on the ID information region 420. The background control interface 400 is a voice call application. In this case, advance time information (03:51) of a corresponding call may be displayed on the ID information region 420 together with "Benni" being a part of a name of another user for call. A switch indicator, namely, the indication "In call" indicating that the call application is switched to the foreground, may be displayed on the switch region 410. An end indicator, namely, indication "End call" indicating that a call application is terminated may be displayed on the end region 430.

A user may switch a display of a call application to a background in such as way that the user positions a finger on the ID information region 420, moves the finger to a switch region 410 in a contact state, and then separates the finger from the switch region 410. Because the switching operation is input sliding a finger, it may refer to sliding input or input dragging or dropping an object displayed on the ID information region 420. Hereinafter, terms 'sliding input' and 'drag & drop input' are used together interchangeably for this example.

As illustrated above, hereinafter, for convenience, an operation positioning a finger on the ID information region 420, then moving the finger to a switch region 410 while in a contact state (or close to be within a threshold that signifies contact, and then separating the finger from the switch region 410 refers to 'switch sliding input'. Meanwhile, an input positioning a finger on the ID information region 420, moving the finger to an end region 430 in a contact state, and then separating the finger from the end region 430 refers to 'end sliding input'. The switch sliding input is an example of switch inputs switching a corresponding application to a foreground. The end sliding input is an example of end inputs terminating a corresponding application. In a modified exemplary embodiment, input touching the switch region 410 may become the switch input, and input touching the end region 430 may become the end input. However, hereinafter, unless a separate mention is given, 'end input' means end sliding input and 'switch input' means switch sliding input.

In a modified exemplary embodiment, when a user starts a touch from the ID information region 420, and drags & drops the touch in a preset direction by greater than a predetermined distance, it may be recognized as switch sliding input. Conversely, when a user starts a touch from the ID information region 420, and drags & drops the touch in another preset direction by greater than the predetermined distance, it may be recognized as end sliding input. Recognizing certain sliding input as the switch sliding input or the end sliding input may change according to respective exemplary embodiments and a request of a user.

Referring now back to FIG. 2, the controller 160 determines whether the touch sensor 131 receives a switch input (250). When the touch sensor 131 receives the switch input, the controller 160 switches a display of a corresponding call application to a foreground (260). When the touch sensor 131 does not receive the switch input, the process goes to step 270. The controller 160 determines whether the touch sensor 131 receives end input (270). When the touch sensor 131 receives the end input, the controller 160 terminates a corresponding call application (280). When the touch sensor 131 does not receive the end input, the process returns to step 250 and the controller 160 maintain a current state until the touch sensor 131 receives the switch input or the end input. Step 250 and step 270 may be simultaneously performed in parallel. It may be appreciated that step 260 or step 280 is performed when the switch input or the end input is received through the background control interface.

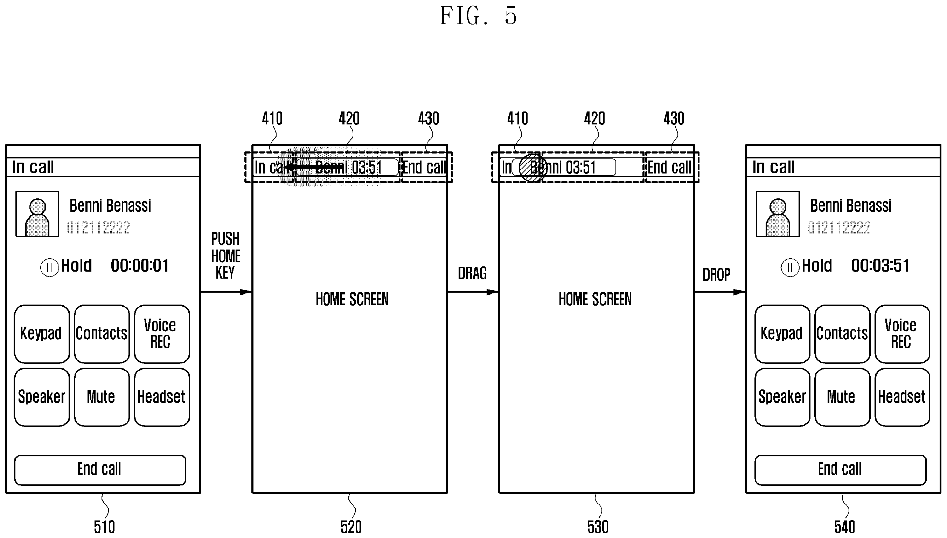

FIG. 5 is a view illustrating a method for providing multi-tasking interface at the time of a voice call. In this example, a voice call application is switched to a background and then again switched to a foreground.

A voice call with Benni Benassi is being displayed on a screen 510. If a user pushes a home key, namely, if an input unit receives background switch input, the controller 160 switches the display of the voice call application to a background and displays a home screen. Further, the controller 160 may control the display unit 132 to display the background control interface at an upper end of a home screen. A home screen is displayed on the screen 520 and the background control interface is displayed at an upper end of the home screen. This background control interface is identical to the background control interface 400 described in FIG. 4.

A user may actuate a switch sliding input in the background control interface of a screen 520. If the user starts a touch from an ID information region 420 to move a touch contact point to a switch region 410, that is, performs drag input, an ID information indication (Benni 03:51) may move with a screen 530. Movement of the ID information display is not essential. If a user terminates drop, namely, a touch in a state that a touch contact point is moved to the switch region 410, the controller 160 recognizes it as switch sliding input and switches a corresponding voice call application to a foreground.

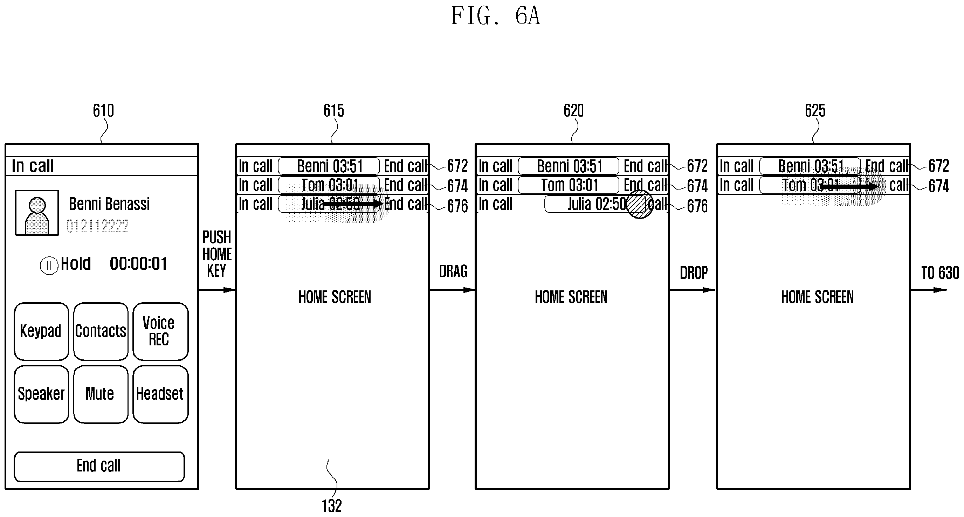

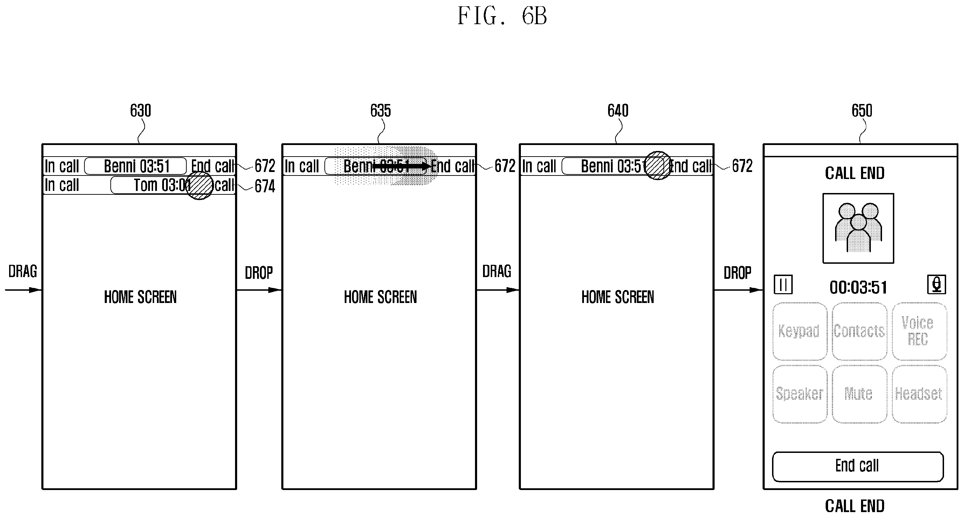

FIG. 6a and FIG. 6b are views illustrating a method for providing multi-tasking interface at the time of a conference call. A screen 610 is a conference call screen. It is assumed that a user is performing a conference call with other three users. If a user pushes a home key during the conference call, that is, if an input senses background switch input, the controller 160 switches a call application to a background.

Similar to the example shown in FIG. 5, in FIG. 6 a home screen is displayed on a screen 615 and a background control interface is displayed at an upper end of the home screen. However, a call with each user in the conference call is handled as one application. The display unit 132 displays a first background control interface 672 controlling a call application with Benni, a second background control interface 674 controlling a call application with Tom, and a third background control interface 676 controlling a call application with Julia at an upper end of the home screen in a list form.

If the touch sensor 131 senses end input through a background control interface 676, a call with Julia is terminated through a screen 620 like a screen 625. A conference call of Benni and Tom maintains in a screen 625 state. The touch sensor 131 again senses end input through a background control interface 674 in the screen 625 state. Accordingly, a call with Tom is terminated through a screen 630 like a screen 635. A display of a call with Benni maintains in a screen 635 state. Because there is 1 other user, it is not a conference state. The touch sensor again senses end input through a background control interface 672 in a screen 635 state. Accordingly, an entire call is terminated through a screen 649 like a screen 650 (FIG. 6B).

Although a call with a call party Julia is displayed at a downward direction and is firstly terminated in the example of FIG. 6a and FIG. 6b, a call with Tom or Benni may be firstly terminated regardless of an order. For example, if firstly terminating a call with Tom, the background control interface 676 may be moved to a location of the background control interface 674.

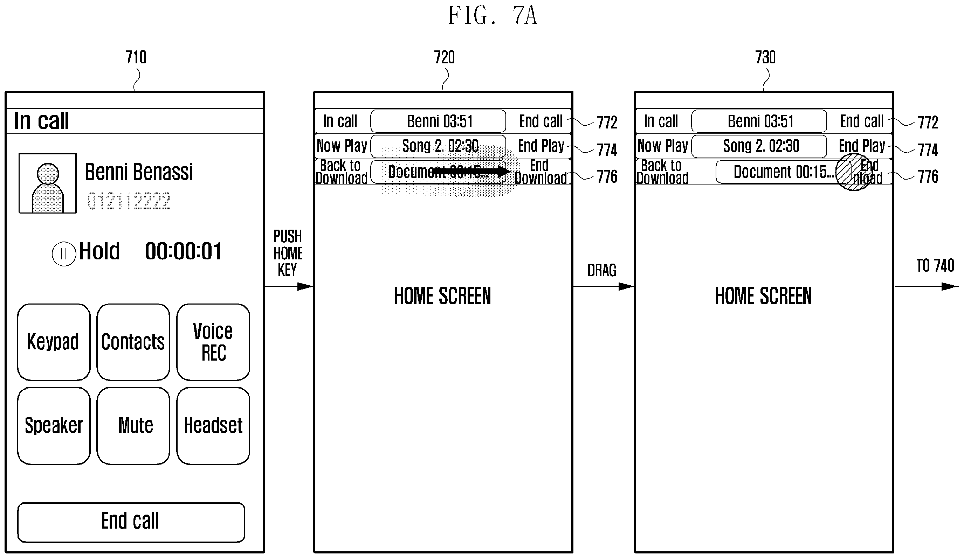

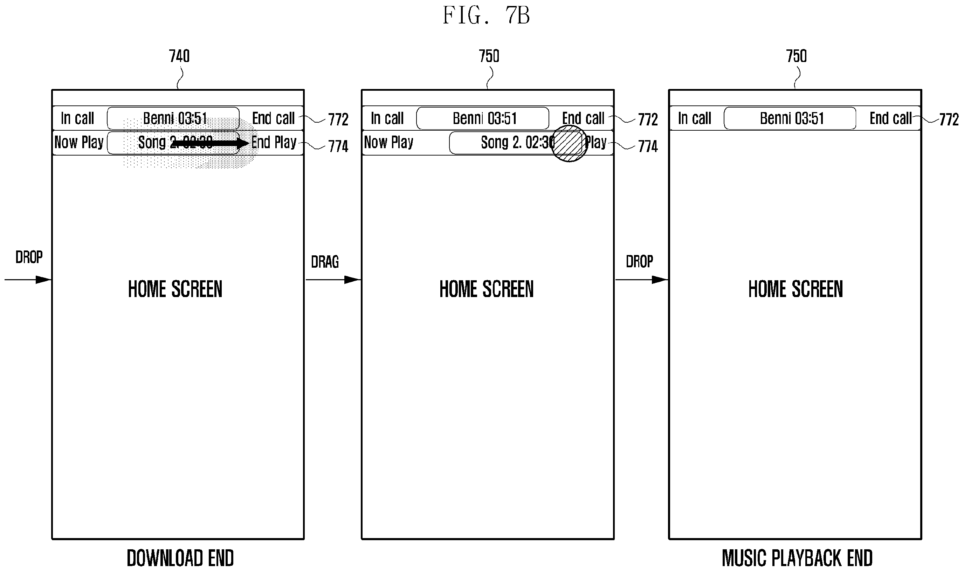

FIG. 7a and FIG. 7b are views illustrating examples of a method for providing multi-tasking interfaces of a call and another interface useful for understanding the present invention.

A call with Benni Benassi is being executed by the phone and displayed in a foreground on a screen 710. If an input unit senses home key input, the controller 160 switches a corresponding call display application to a background and controls the display unit 132 to display a home screen like a screen 720. Three background control interfaces 772, 774, and 776 are displayed at an upper end of a home screen on the screen 720. A first background control interface 772 controls a call application with Benni. A second background interface 774 controls a music playback application. A third background control interface 776 controls a file download application.

The touch sensor 131 receives end sliding input through a background control interface 776 in a screen 720 state. Accordingly, the controller 160 terminates the file download application through a screen 730 as shown in a screen 740. The touch sensor 131 receives the end sliding input through a background control interface 774 in a screen 740 state. Accordingly, the controller 160 terminates a music playback application through a screen 750 as shown in a screen 760, and executes only a call application with Benni in a background. Subsequently, as in a case of FIG. 5, a call with Benni is switched to a foreground display through switch input. Conversely, a call application with Benni may be terminated through end input.

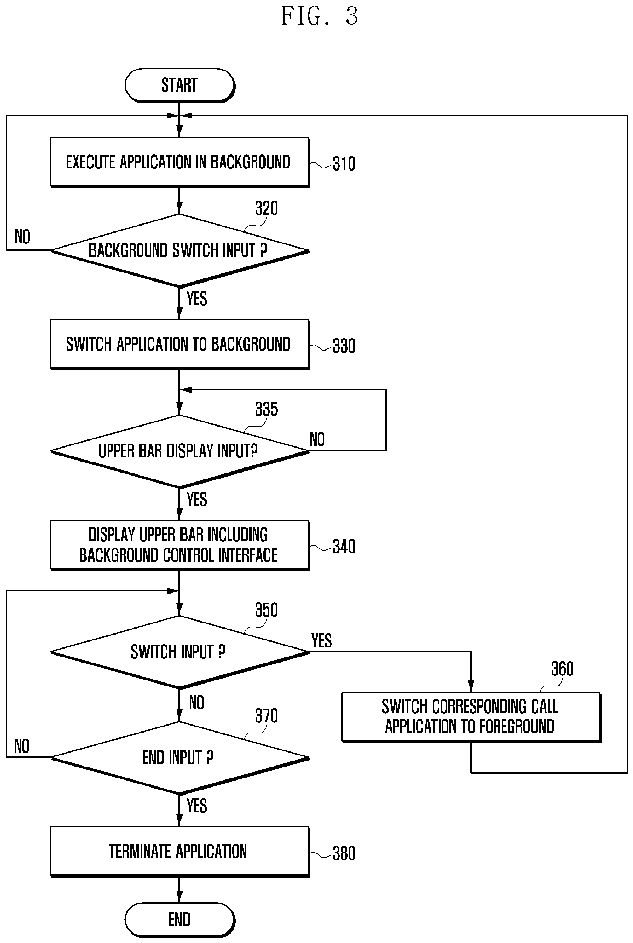

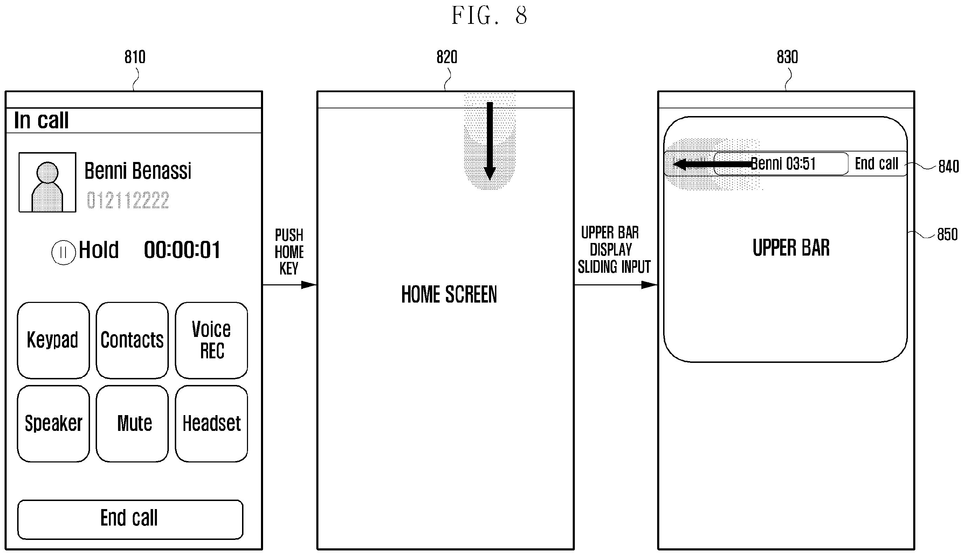

FIG. 3 is a flowchart illustrating a method for providing multi-tasking interface according to an embodiment of the present invention. FIG. 8 is a view illustrating a terminal 100 screen in a method for providing multi-tasking interface according to another embodiment of the present invention.

In the exemplary embodiments of FIG. 3 and FIG. 8, an upper bar is displayed that indicates a background control interface according to the upper bar display input.

Step 310, step 320, and step 330 of FIG. 3 are substantially the same as step 210, step 220, and step 230, and thus a detailed description thereof is omitted.

With reference to FIG. 8, a screen 810 indicates that a voice call application with Benni Benassi is executed while displayed in a foreground. At this time, if an input unit senses a home key actuation, that is, if the input unit senses background switch input, the controller 160 switches a voice call application to a background and controls the display unit 132 to display a home screen. Accordingly, a home screen is displayed like a screen 820 shown in FIG. 8. Unlike exemplary embodiments of FIG. 2 and FIG. 5, a background control interface is not directly displayed on the home screen. That is, after switching the application to the background, the display unit 132 does not directly display the background control interface (330).

With continued reference to the flowchart in FIG. 3, an input unit determines whether upper bar display input is sensed (335). For example, the upper bar display input may be input that comprises a touch starting from a predetermined part of an upper end of the screen and slides in a downward direction by a predetermined length in a contact state. When the input does not sense the upper bar display input, the process waits until the upped bar display input is sensed and repeats step 335. When the input unit senses an upper bar display unit, the processor goes to step 340. Referring to FIG. 8, the touch sensor 131 may receive input starting from a predetermined part and sliding in a downward direction by a predetermined distance, namely, an upper bar display input.

At (340), the controller 160 controls the display unit 132 to display an upper bar 850. A screen 830 is a screen displaying the upper bar 850. The upper bar 850 is an interface displayed when an input unit receives display input while executing a home screen or a partial application. In the exemplary embodiments of FIG. 3 and FIG. 8, the upper bar 850 includes a background control interface 840 capable of controlling a call application executed in a background. A user may switch the call application to a foreground or terminate the call application using the background control interface 840.

Steps 350, 360, 370, and 380 of FIG. 3 are substantially identical with steps 250, 260, 270, and 280 of FIG. 2, and thus a detailed description thereof is omitted.

In this case, it will be appreciated that respective blocks of processing flowcharts and a combination thereof may be performed by computer program instructions comprising code loaded on a non-transitory machine readable medium. Since computer program instructions may be mounted in a processor or micro-processor of a universal computer, a special computer or other programmable data processing equipment, instructions performed through a processor of a computer or other programmable data processing equipment generates means for performing functions described in block(s) of the flowcharts. Since the computer program instructions may be stored in a computer available or computer readable memory capable of orienting a computer or other programmable data processing equipment to implement functions in a specific scheme, instructions stored in the computer available or computer readable memory may produce manufacturing articles involving an instruction for executing functions described in block(s) of flowcharts. Because the computer program instructions may be mounted on a computer or other programmable data processing equipment, a series of operation steps are performed in the computer or other programmable data processing equipment to create a process executed by the computer such that instructions performing the computer or other programmable data processing equipment may provide steps for executing functions described in block(s) of flowcharts.

Further, each block may indicate a part of a module, a segment, or a code including at least one executable instruction for executing specific logical function(s). It should be noticed that several execution examples may generate functions described in blocks out of an order. For example, two continuously shown blocks may be simultaneously performed, and the blocks may be performed in a converse order according to corresponding functions.

As used in this embodiment, the term "∼ unit" refers to software or a hardware structural element such as FPGA or ASIC, and the "∼ unit" perform some roles. However, the "∼ unit" is not limited to software or hardware. The "∼ unit" can be configured to be stored in an addressable storage medium and to play at least one processor. Accordingly, for example, the "∼ unit" includes software structural elements, object-oriented software structural elements, class structural elements, task structural elements, processes, functions, attributes, procedures, subroutines, segments of a program code, drivers, firmware, microcode, circuit, data, database, data structures, tables, arrays, and variables. Functions provided in structural elements and "∼ units" may be engaged by the smaller number of structural elements and "∼ units", or may be divided by additional structural elements and "∼ units". Furthermore, structural elements and "∼ units" may be implemented to play a device or at least one CPU in a security multimedia card.

The above-described methods according to the present invention can be realized in hardware or as software or computer code that can be stored in a recording medium such as, for example, a CD ROM, a DVD, a RAM, thumbnail drive, a floppy disk, a flash storage, a hard disk, or a magneto-optical disk or downloaded over a network, so that the methods described herein can be executed by such software using a general purpose computer, or a special processor, microprocessor or in programmable or dedicated hardware, such as an ASIC or FPGA. As would be understood in the art, the computer, the processor or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

A terminal 100 according to an exemplary embodiment of the present invention may be one of portable electronic devices such as a Personal Digital Assistant (PDA), a navigation system, a digital broadcasting receiver, and a Portable Multimedia Player (PMP), just to name a few possible examples.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

## Claims

1. A method for providing a multi-tasking interface of a terminal, the method comprising:
receiving a background switch input that switches display of an application being executed from a foreground to a background of a display unit;
switching the display of the application to the background when the background switch input is received; and
displaying a background control interface, for controlling the application, in response to a sliding input requesting display of the background control interface after switching display of the application to the background.

2. The method of claim 1, wherein the application is a call application and the background control interface displays time information of a corresponding call.

3. The method of claim 1 or claim 2, wherein the sliding input requesting display of the background control interface comprises a touch starting from a predetermined part of an upper end of a screen and slides in a downward direction by a predetermined length in a contact state.

4. The method of claim 1 further comprising switching the display of the application to the foreground when a preset switch input is received through the background control interface or terminating the application when a preset end input is received through the background control interface.

5. The method of claim 4, wherein switching the application comprises switching display of the application to the foreground of the display when a sliding input is received starting from a preset identification information region of the background control interface and being terminated at a preset switch region of the background control interface.

6. The method of claim 5, wherein terminating the sliding input comprises terminating operation of the application when the sliding input starts at the identification information region and is terminated at a preset end region.

7. The method of claim 6, wherein the background control interface comprises identification information of the application at the identification information region, a switch indicator at the switch region, and an end indicator at the end region.

8. The method of any preceding claim, wherein displaying a background control interface comprises displaying a plurality of regions in a list at an upper end of a home screen.

9. A terminal for providing a multi-tasking interface, the terminal comprising:
an input unit that receives a background switch input to switch display of an application being executed in a foreground to display in a background and a sliding input requesting display of a background control interface for controlling the application;
a controller that switches the display of the application to the background when the input unit receives the background switch input; and
a display unit that displays the background control interface after the controller switches display of the application to the background in response to the sliding input.

10. The terminal of claim 9, wherein the application is a call application and the background control interface displays time information of a corresponding call.

11. The terminal of claim 9 or claim 10, wherein the sliding input requesting display of the background control interface comprises a touch starting from a predetermined part of an upper end of a screen and slides in a downward direction by a predetermined length in a contact state.

12. The terminal of claim 9, wherein the controller switches the display of the application to the foreground when receiving a preset switch input through the background control interface or terminates the application when receiving a preset end input through the background control interface.

13. The terminal of any one of claims 12, wherein the controller switches display of the application to the foreground when a sliding input is received that starts from a preset identification information region of the background control interface and is terminated at a preset switch region of the background control interface.

14. The terminal of claim 12, wherein the controller terminates the application when sliding input starting at the identification information region and being terminated at a preset end region is received.

15. The terminal of claim 14, wherein the background control interface comprises identification information of the application at the identification information region, a switch indicator at the switch region, and an end indicator at the end region.

16. The terminal of any one of claims 9 to 15, wherein the display unit displays a list of the background control interface at an upper end of a home screen.

17. A computer program comprising instructions arranged, when executed, to implement a method in accordance with any one of claims 1 to 8.

18. Machine-readable storage storing a computer program in accordance with claim 17.

## Patentansprüche

1. Verfahren zur Bereitstellung einer Multitasking-Schnittstelle eines Endgeräts, wobei das Verfahren Folgendes umfasst:
Empfangen einer Eingabe eines Hintergrundschalters, der eine Anzeige einer Anwendung, die ausgeführt wird, von einem Vordergrund zu einem Hintergrund einer Anzeigeeinheit umschaltet;
Umschalten der Anzeige der Anwendung auf den Hintergrund, wenn die Eingabe des Hintergrundschalters empfangen wird; und
Anzeigen einer Hintergrundsteuerungsschnittstelle zum Steuern der Anwendung, als Reaktion auf eine gleitende Eingabe, die die Anzeige der Hintergrundsteuerschnittstelle anfordert, nachdem die Anzeige der Anwendung auf den Hintergrund umgeschaltet wurde.

2. Verfahren nach Anspruch 1, wobei die Anwendung eine Anrufanwendung ist und die Hintergrundsteuerungsschnittstelle Zeitinformationen eines entsprechenden Anrufs anzeigt.

3. Verfahren nach Anspruch 1 oder 2, wobei die gleitende Eingabeanforderungsanzeige der Hintergrundsteuerungsschnittstelle eine Berührung umfasst, die von einem vorbestimmten Teil eines oberen Endes eines Bildschirms ausgeht und in einer Abwärtsrichtung um eine vorbestimmte Länge in einem Kontaktzustand gleitet.

4. Verfahren nach Anspruch 1, das ferner das Umschalten der Anzeige der Anwendung auf den Vordergrund umfasst, wenn eine voreingestellte Schalteingabe über die Hintergrundsteuerschnittstelle empfangen wird oder die Anwendung beendet wird, wenn eine voreingestellte Endeingabe über die Hintergrundsteuerungsschnittstelle empfangen wird.

5. Verfahren nach Anspruch 4, wobei das Umschalten der Anwendung das Umschalten der Anzeige der Anwendung auf den Vordergrund der Anzeige umfasst, wenn eine Gleiteingabe empfangen wird, die von einem voreingestellten Identifikationsinformationsbereich der Hintergrundsteuerungsschnittstelle ausgeht und an einem voreingestellten Schalterbereich der Hintergrundsteuerungsschnittstelle endet.

6. Verfahren nach Anspruch 5, wobei das Beenden der Gleiteingabe das Beenden des Betriebs der Anwendung umfasst, wenn die Gleiteingabe bei dem Identifikationsinformationsbereich beginnt und bei einem voreingestellten Endbereich beendet wird.

7. Verfahren nach Anspruch 6, wobei die Hintergrundsteuerschnittstelle Folgendes umfasst: Identifikationsinformationen der Anwendung an dem Identifikationsinformationsbereich, einen Schalterindikator am Schalterbereich und einen Endindikator am Endbereich.

8. Verfahren nach einem der vorhergehenden Ansprüche, wobei das Anzeigen einer Hintergrundsteuerschnittstelle das Anzeigen einer Vielzahl von Bereichen in einer Liste an einem oberen Ende eines Startbildschirms umfasst.

9. Endgerät zum Bereitstellen einer Multitasking-Schnittstelle, wobei das Endgerät Folgendes umfasst:
eine Eingabeeinheit, die eine Hintergrundschalteingabe empfängt, um die Anzeige einer Anwendung, die in einem Vordergrund ausgeführt wird, so umzuschalten, dass sie im Hintergrund angezeigt wird, und eine Gleiteingabe, die eine Anzeige einer Hintergrundsteuerungsschnittstelle zur Steuerung der Anwendung anfordert;
eine Steuerung, die die Anzeige der Anwendung auf den Hintergrund umschaltet, wenn die Eingabeeinheit die Hintergrundschalteingabe empfängt; und
eine Anzeigeeinheit, die die Hintergrundsteuerungsschnittstelle anzeigt, nachdem die Steuerung die Anzeige der Anwendung als Reaktion auf die Gleiteingabe auf den Hintergrund umschaltet.

10. Endgerät nach Anspruch 9, wobei die Anwendung eine Anrufanwendung ist und die Hintergrundsteuerungsschnittstelle Zeitinformationen eines entsprechenden Anrufs anzeigt.

11. Endgerät nach Anspruch 9 oder 10, wobei die gleitende Eingabeanforderungsanzeige der Hintergrundsteuerungsschnittstelle eine Berührung umfasst, die von einem vorbestimmten Teil eines oberen Endes eines Bildschirms ausgeht und in einer Abwärtsrichtung um eine vorbestimmte Länge in einem Kontaktzustand gleitet.

12. Endgerät nach Anspruch 9, wobei die Steuerung die Anzeige der Anwendung auf den Vordergrund umschaltet, wenn eine voreingestellte Schalteingabe über die Hintergrundsteuerschnittstelle empfangen wird, oder die Anwendung beendet, wenn eine voreingestellte Endeingabe über die Hintergrundsteuerungsschnittstelle empfangen wird.

13. Endgerät nach Anspruch 12, wobei die Steuerung die Anzeige der Anwendung auf den Vordergrund umschaltet, wenn eine Gleiteingabe empfangen wird, die von einem voreingestellten Identifikationsinformationsbereich der Hintergrundsteuerungsschnittstelle ausgeht und an einem voreingestellten Schalterbereich der Hintergrundsteuerungsschnittstelle endet.

14. Endgerät nach Anspruch 12, wobei die Steuerung die Anwendung beendet, wenn eine Gleiteingabe empfangen wird, die von dem Identifikationsinformationsbereich ausgeht und an einem voreingestellten Endbereich endet.

15. Endgerät nach Anspruch 14, wobei die Hintergrundsteuerschnittstelle Folgendes umfasst: Identifikationsinformationen der Anwendung an dem Identifikationsinformationsbereich, einen Schalterindikator am Schalterbereich und einen Endindikator am Endbereich.

16. Endgerät nach einem der Ansprüche 9 bis 15, wobei die Anzeigeeinheit eine Liste der Hintergrundsteuerungsschnittstelle an einem oberen Ende eines Startbildschirmes anzeigt.

17. Computerprogramm das Befehle umfasst, die, wenn sie ausgeführt werden, ein Verfahren nach einem der Ansprüche 1 bis 8 durchzuführen.

18. Maschinenlesbarer Speicher, der ein Computerprogramm nach Anspruch 17 speichert.

## Revendications

1. Un procédé de fourniture d'une interface multitâche d'un terminal, le procédé comprenant :
la réception d'une entrée de commutation vers l'arrière-plan qui commute l'affichage d'une application en cours d'exécution d'un premier plan vers un arrière-plan d'une unité d'affichage,
la commutation de l'affichage de l'application vers l'arrière-plan lorsque l'entrée de commutation vers l'arrière-plan est reçue, et
l'affichage d'une interface de commande d'arrière-plan, destinée à la commande de l'application, en réponse à une entrée par glissement demandant l'affichage de l'interface de commande d'arrière-plan après la commutation de l'affichage de l'application vers l'arrière-plan.

2. Le procédé selon la Revendication 1, où l'application est une application d'appel et l'interface de commande d'arrière-plan affiche des informations temporelles d'un appel correspondant.

3. Le procédé selon la Revendication 1 ou 2, où l'entrée par glissement demandant l'affichage de l'interface de commande d'arrière-plan comprend un contact tactile débutant à partir d'une partie prédéterminée d'une extrémité supérieure d'un écran et glisse dans une direction descendante d'une longueur prédéterminée dans un état en contact.

4. Le procédé selon la Revendication 1 comprenant en outre la commutation de l'affichage de l'application vers le premier plan lorsqu'une entrée de commutation prédéfinie est reçue par l'intermédiaire de l'interface de commande d'arrière-plan ou la fermeture de l'application lorsqu'une entrée de fin prédéfinie est reçue par l'intermédiaire de l'interface de commande d'arrière-plan.

5. Le procédé selon la Revendication 4, où la commutation de l'application comprend la commutation de l'affichage de l'application vers le premier plan de l'affichage lorsqu'une entrée par glissement est reçue débutant à partir d'une zone d'informations d'identification prédéfinie de l'interface de commande d'arrière-plan et se terminant au niveau d'une zone de commutation prédéfinie de l'interface de commande d'arrière-plan.

6. Le procédé selon la Revendication 5, où l'achèvement de l'entrée par glissement comprend l'achèvement de l'exploitation de l'application lorsque l'entrée par glissement débute au niveau de la zone d'informations d'identification et se termine au niveau d'une zone de fin prédéfinie.

7. Le procédé selon la Revendication 6, où l'interface de commande d'arrière-plan comprend des informations d'identification de l'application au niveau de la zone d'informations d'identification, un indicateur de commutation au niveau de la zone de commutation et un indicateur de fin au niveau de la zone de fin.

8. Le procédé selon l'une quelconque des Revendications précédentes, où l'affichage d'une interface de commande d'arrière-plan comprend l'affichage d'une pluralité de zones dans une liste au niveau d'une extrémité supérieure d'un écran d'accueil.

9. Un terminal destiné à la fourniture d'une interface multitâche, le terminal comprenant :
une unité d'entrée qui reçoit une entrée de commutation vers l'arrière-plan destinée à la commutation de l'affichage d'une application en cours d'exécution dans un premier plan destinée à un affichage dans un arrière-plan et une entrée par glissement demandant l'affichage d'une interface de commande d'arrière-plan destinée à la commande de l'application,
un dispositif de commande qui commute l'affichage de l'application vers l'arrière-plan lorsque l'unité d'entrée reçoit l'entrée de commutation vers l'arrière-plan, et
une unité d'affichage qui affiche l'interface de commande d'arrière-plan une fois que le dispositif de commande a commuté l'affichage de l'application vers l'arrière-plan en réponse à l'entrée par glissement.

10. Le terminal selon la Revendication 9, où l'application est une application d'appel et l'interface de commande d'arrière-plan affiche des informations temporelles d'un appel correspondant.

11. Le terminal selon la Revendication 9 ou 10, où l'entrée par glissement demandant l'affichage de l'interface de commande d'arrière-plan comprend un contact tactile débutant à partir d'une partie prédéterminée d'une extrémité supérieure d'un écran et glissant dans une direction descendante d'une longueur prédéterminée dans un état en contact.

12. Le terminal selon la Revendication 9, où le dispositif de commande commute l'affichage de l'application vers le premier plan lors de la réception d'une entrée de commutation prédéfinie par l'intermédiaire de l'interface de commande d'arrière-plan ou ferme l'application lors de la réception d'une entrée de fin prédéfinie par l'intermédiaire de l'interface de commande d'arrière-plan.

13. Le terminal selon la Revendication 12, où le dispositif de commande commute l'affichage de l'application vers le premier plan lorsqu'une entrée par glissement est reçue qui débute à partir d'une zone d'informations d'identification prédéfinie de l'interface de commande d'arrière-plan et se termine au niveau d'une zone de commutation prédéfinie de l'interface de commande d'arrière-plan.

14. Le terminal selon la Revendication 12, où le dispositif de commande ferme l'application lorsqu'une entrée par glissement débutant au niveau de la zone d'informations d'identification et se terminant au niveau d'une zone de fin prédéfinie est reçue.

15. Le terminal selon la Revendication 14, où l'interface de commande d'arrière-plan comprend des informations d'identification de l'application au niveau de la zone d'informations d'identification, un indicateur de commutation au niveau de la zone de commutation et un indicateur de fin au niveau de la zone de fin.

16. Le terminal selon l'une quelconque des Revendications 9 à 15, où l'unité d'affichage affiche une liste de l'interface de commande d'arrière-plan au niveau d'une extrémité supérieure d'un écran d'accueil.

17. Un programme informatique contenant des instructions agencées, lorsqu'elles sont exécutées, de façon à mettre en oeuvre un procédé selon l'une quelconque des Revendications 1 à 8.

18. Un support à mémoire lisible par ordinateur contenant en mémoire un programme informatique selon la Revendication 17.
